# EUROPEAN PATENT SPECIFICATION

(11) **EP 2 950 906 B1**
(45) Date of publication and mention of the grant of the patent: **30.12.2020**
(21) Application number: 14746416.8
(22) Date of filing: 29.01.2014
(51) Int. Cl.: B01D 29/90, B07B 13/16, B07B 1/00, B01D 29/07

(54) **SIEVE BOX AND ADJUSTABLE NOZZLE ASSEMBLY**
SIEBKASTEN UND EINSTELLBARE DÜSENANORDNUNG
BOÎTE À TAMIS ET ENSEMBLE BUSE AJUSTABLE

(30) Priority: 29.01.2013 US 201361758186 P
(43) Date of publication of application: 09.12.2015
(73) Proprietor: Aqseptence Group, Inc., New Brighton, MN 55112 (US)
(72) Inventor: FLANSBURG, Charles H., Andover, Minnesota 55304 (US); EKHOLM, Michael Richard, Minneapolis, Minnesota 55408 (US); DEHN, Steven Douglas, Minneapolis, Minnesota 55412 (US); BRABEC, Dean, North Branch, Minnesota 55056 (US); PIEROTTI, Michael Hans, Johnston, Iowa 50131 (US)
(74) Representative: Grünecker Patent- und Rechtsanwälte PartG mbB
(86) International application number: PCT/US2014/013498
(87) International publication number: WO 2014/120712

(56) References cited:
- EP-A2- 0 567 208
- WO-A1-95/33573
- US-A- 3 570 670
- US-A- 3 570 670
- US-A- 4 113 626
- US-A- 4 202 777
- US-A- 4 941 971
- US-A- 5 135 580

## Description

### CROSS-REFERENCE TO RELATED APPLICATION

### FIELD

Embodiments disclosed herein generally relate to sieve boxes, and more particularly relate to sieve boxes including adjustable nozzle assemblies.

### BACKGROUND

Sieve boxes contain stationary nozzles that spray a slurry onto the surface of a sieve screen. Over time, the slurry wears down the sieve screen at the initial contact point, often near the top of the screen, thereby rendering the sieve screen so ineffective that it must be replaced. It is common practice to flip the sieve screen upside down so that the worn area is put on the bottom and an unworn area of the sieve screen is brought to the top where the slurry spraying occurs. Although this practice may double the life of the sieve screen, it does not change the wear of the sieve screen at these specific locations proximate to the top and the bottom of the screen. Also, it can be a very time consuming process to remove, re-orient, and re-attach the sieve screen to the sieve box.

Therefore, there is a need for an improved approach to extending the operating life of sieve screens.

### SUMMARY

A nozzle assembly for a sieve box according to claim 1 is provided. The nozzle assembly includes a support assembly configured to be mounted in a sieve box, and a nozzle operatively connected to the support assembly. The support assembly is configured to allow both of lateral movement and rotational movement of the nozzle relative to the sieve box. It comprises a first elongated support member, a second elongated support member that is substantially parallel to and in fixed spatial relation with the first elongated support member, a first support collar defining an opening through which the first elongated support member is received, and a second support collar defining an opening through which the second elongated support member is received, and a nozzle is operatively connected to the first support collar and the second support collar. The support collars and elongated support members are configured to provide both of lateral movement and rotational movement of the nozzle relative to the support collars and elongated support members.

In another embodiment and in combination with the above embodiment, the first elongated support member and the second elongated support member each comprise a rod. In another embodiment and in combination with the above embodiment, the first elongated support member and the second elongated support member comprise one or more plates, one or more rectangular bars, or a combination thereof.

In another embodiment and in combination with any of the above embodiments, at least one of the first elongated support member and the second elongated support member is configured to move when coupled to the sieve box to adjust a spray angle of the nozzle. In another embodiment and in combination with any of the above embodiments, pivoting of the second elongated support member about the first elongated support member adjusts the angle at which the nozzle is disposed. In another embodiment and in combination with any of the above embodiments, the first elongated support member and the second elongated support member are externally threaded, and the first support collar and the second support collar are internally threaded, such that when the elongated support members are rotated, the support collars translate laterally along the respective elongated support member.

The nozzle assembly also includes a plate member to which the first support collar, the second support collar, and the nozzle are mounted. Pivoting of the second elongated support member about the first elongated support member adjusts the angles at which the plate member and the nozzle are disposed. In another embodiment and in combination with any of the above embodiments, the first elongated support member is configured to be mounted at each end to a housing of the sieve box and free to rotate about a longitudinal axis of the first elongated support member, and the second elongated support member is configured to be mounted at each end within an opening in the housing configured to allow movement perpendicular to a longitudinal axis of the second elongated support member. In some such embodiments, the nozzle assembly also includes at least one rotatable engagement member configured to engage the housing and selectively secure the second elongated support member in a fixed position relative to the housing.

In another embodiment and in combination with any of the above embodiments, a third support collar defines an opening through which the first elongated support member is received and is spaced from the first support collar, and a fourth support collar defines an opening through which the second elongated support member is received and is spaced from the second support collar. A plurality of nozzles is mounted to a support structure to which the support collars are also mounted. The support collars and elongated support members are configured to provide at least one of lateral movement and rotational movement of the plurality of nozzles relative to the support collars and elongated support members. In some such embodiments, the support structure comprises a plate member. In other such embodiments, the support structure comprises a frame and cross-members. In some embodiments, the support assembly comprises one or more plates, one or more rectangular bars, or a combination thereof. Other support structures known in the art that facilitate similar adjustments to the nozzle orientation and position can also be applied.

In accordance with another embodiment disclosed herein, a sieve box according to claim 8 is provided that includes a housing and one or more nozzle assemblies. A nozzle assembly includes a support assembly configured to be mounted in the sieve box and a plurality of nozzles operatively connected to the support assembly. One or more screens are disposed within the housing, and the plurality of nozzles is operable to inject a slurry onto the respective screen for separating the slurry into one or more components. The support assembly allows both of lateral movement and rotational movement of the plurality of nozzles relative to the sieve box.

In another embodiment and in combination with the above embodiment, the support assembly includes a first elongated support member that is coupled to the housing, a second elongated support member that is substantially parallel to and in fixed spatial relation with the first elongated support member and that is coupled to the housing, a first support collar and a second support collar that each define an opening through which the first elongated support member is received, and a third support collar and a fourth support collar that each define an opening through which the second elongated support member is received. A plurality of nozzles is operatively connected to the support collars. The support collars and elongated support members are configured to provide at least one of lateral movement and nozzle pitch, yaw, and axial (roll) rotational movement of the plurality of nozzles relative to the support collars and elongated support members. In other embodiments, nozzle adjustment can be achieved for individual and group or banked nozzles by other mounting methods known in the art.

In another embodiment and in combination with any of the above embodiments, the support assembly includes a support structure to which the support collars and the plurality of nozzles are mounted. In some such embodiments, the support structure comprises a plate member. In other such embodiments, the support structure comprises a frame and cross-members. In another embodiment and in combination with any of the above embodiments, the first elongated support member and the second elongated support member each comprise a rod. In another embodiment and in combination with any of the above embodiments, at least one of the first elongated support member and the second elongated support member are moveable within an opening in the housing to adjust a spray angle of the nozzle. In another embodiment and in combination with any of the above embodiments, pivoting of the second elongated support member about the first elongated support member adjusts the angle at which the plurality of nozzles is disposed.

In another embodiment and in combination with any of the above embodiments, the first elongated support member and the second elongated support member are externally threaded, and the first support collar and the second support collar are internally threaded, such that when the elongated support members are rotated, the support collars translate laterally along the respective elongated support member. In another embodiment and in combination with any of the above embodiments, the first elongated support member is mounted at each end to the housing and free to rotate about a longitudinal axis of the first elongated support member, and the second elongated support member is mounted at each end within an opening in the housing configured to allow movement perpendicular to a longitudinal axis of the second elongated support member. In some such embodiments, rotatable engagement members are provided that are configured to engage the housing and selectively secure the second elongated support member in a fixed position relative to the housing. Other embodiments of engagement of the adjustable nozzle system to the sieve box known in the art are applicable.

In accordance with another embodiment disclosed herein, a method of adjusting a nozzle assembly in a sieve box according to claim 9 is provided. The sieve box includes a housing and one or more nozzle assemblies. A nozzle assembly includes a first elongated support member coupled to the housing, a second elongated support member that is substantially parallel to and in fixed spatial relation with the first elongated support member and that is coupled to the housing. A first support collar and a second support collar each define an opening through which the first elongated support member is received, and a third support collar and a fourth support collar define an opening through which the second elongated support member is received. A plurality of nozzles is operatively connected to the support collars. One or more screens are disposed within the housing, and the plurality of nozzles is operable to inject a slurry onto the respective screen for separating the slurry into one or more components. The support collars and elongated support members are configured to provide at least one of lateral movement and rotational movement of the plurality of nozzles relative to the support collars and elongated support members. The method includes, for one or more muzzle assemblies, disengaging the first elongated support member from a first, fixed position relative to the housing and the second elongated support member to make the first elongated support member slideable within openings formed in the housing at each end of the first elongated support member. The first elongated support member is moved within the openings to adjust the spray angle of the plurality of nozzles. The housing is engaged by the second elongated support member at each end of the first elongated support member to secure the second elongated support member in a second, fixed position relative to the housing and the first elongated support member. Other embodiments include alternate support mechanisms known in the art.

In some embodiments and in combination with the above embodiment of a method, in one or more nozzle assemblies the first elongated support member and the second elongated support member are externally threaded, and the first support collar and the second support collar are internally threaded. The first elongated support member is rotated about its longitudinal axis, causing the first and second support collars to translate along the first elongated member, and the second elongated support member is rotated about its longitudinal axis, causing the third and fourth support collars to translate along the second elongated support member. In some embodiments and in combination with the above embodiment of a method, the first elongated support member and the second elongated support member are slid along respective longitudinal axes to move the plurality of nozzles laterally.

### BRIEF DESCRIPTION OF THE DRAWINGS

For a more complete understanding, reference should now be had to the embodiments shown in the accompanying drawings and described below. In the drawings:
FIG. 1 is a perspective view of a sieve box assembly according to one embodiment.
FIG. 2 is a perspective view of a nozzle assembly according to one embodiment.
FIG. 3 is a perspective view of a portion of the nozzle assembly of FIG. 2.
FIG. 4 is another perspective view of the sieve box assembly of FIG. 1.
FIG. 5 is a perspective view of the sieve box assembly of FIG. 1 with a sidewall removed for clarity.
FIG. 6 is a section view of the sieve box assembly of FIG. 1, taken along line B-B of FIG. 5.

### DETAILED DESCRIPTION

The following detailed description refers to the accompanying drawings, which illustrate specific embodiments. Other embodiments having different structures and operation do not depart from the scope of the present disclosure.

Certain terminology is used herein for convenience only and is not to be taken as a limitation on the embodiments described. For example, words such as "top", "bottom", "upper," "lower," "left," "right," "horizontal," "vertical," "upward," and "downward" merely describe the configuration shown in the figures. Indeed, the referenced components may be oriented in any direction and the terminology, therefore, should be understood as encompassing such variations unless specified otherwise. Throughout this disclosure, where a process or method is shown or described, the method may be performed in any order or simultaneously, unless it is clear from the context that the method depends on certain actions being performed first.

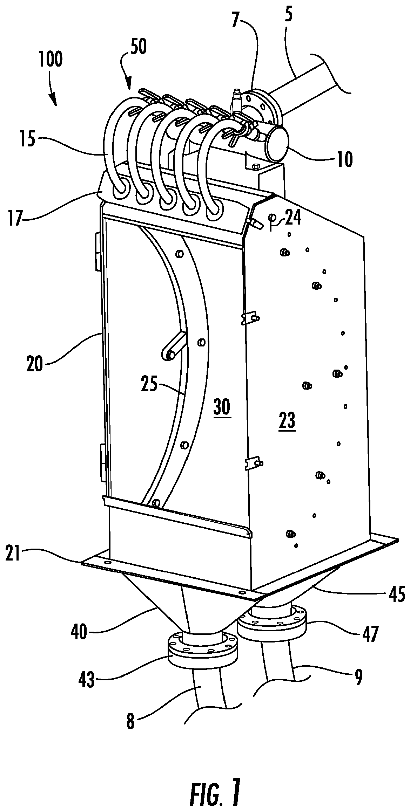

Referring to the drawings, where like reference numerals refer to the same or similar parts, FIG. 1 shows a sieve box assembly **100** with a front door panel removed for clarity. The sieve box assembly **100** is configured to separate a mixture of solids and/or liquids, *e.g.* a slurry, into one or more components. For example, as the slurry flows through the sieve box assembly **100,** the solid components of the slurry may be separated out from the liquid component of the slurry for further processing. In another example, solid components of a larger size may be separated out from solid components of a smaller size and/or from the liquid component of the slurry.

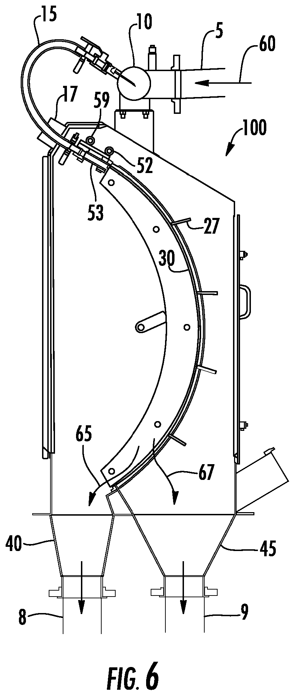

More particularly, the sieve box assembly **100** includes an inlet manifold **10,** a housing **20,** a screen **30,** a first outlet **40,** a second outlet **45,** and a nozzle assembly **50.** An inlet flow line **5** may be connected to the inlet manifold **10** by a sealed, flanged connection **7** for directing a slurry flow into the sieve box assembly **100.** A first end of the nozzle assembly **50** is in fluid communication with the inlet manifold, and a second end of the nozzle assembly **50** is in fluid communication with the housing **20.** The nozzle assembly **50** is configured to inject the slurry flow from the inlet manifold **10** into the housing **20.** A support block **17** may be used to support one or more flexible flow lines **15** of the nozzle assembly **50** that may pass through the support block **17,** and to secure the nozzle assembly **50** to the housing **20.** The support block **17** may include a hollow interior (as illustrated in FIG. 6) such that the portion of the flexible flow lines **15** extending into the support block **17** can be horizontally and/or vertically movable for adjustment of the nozzle assembly **50** as further described herein.

The housing **20** may include any support type structure for supporting the nozzle assembly **50,** the screen **30,** and the first and second outlets **40, 45.** A base **21** of the housing **20** may be used to secure and position the sieve box assembly **100** at floor level for ease of access. The housing **20** may also include one or more sidewalls **23** to form the support structure. As stated above, the front door panel is removed for clarity in FIGS. 1-5 to expose the internal components of the sieve box assembly **100.**

The screen **30** is supported within the housing **20.** A sealed, flanged connection **25** may be used to secure the screen **30** to the inner sidewall surfaces, such as the sidewall **23,** of the housing **20.** One or more support bars or plates **27** (illustrated in FIG. 6) may be used to further support the backside of the screen **30.** Before inserting the screen **30** into the housing **20** or when positioning the screen **30** into the housing **20,** the screen **30** may have a curved shape or may be curved to a shape that generally corresponds to the angle of injection of the slurry to maximize the surface area contact of the slurry with the screen **30.**

The screen **30** is configured to separate the slurry into one or more components. The screen **30** may include a plurality of spaced apart, screen elements arranged to permit liquids and/or solids of a smaller size to pass through the screen **30,** while preventing solids of a larger size from passing through the screen **30,** thereby separating the slurry into one or more components. In one embodiment, such screens may include wire with a substantially triangular cross-section, and may include Vee-Wire® type screens (VEE-WIRE is a registered trademark of Bilfinger Water Technologies, Inc.) or wedge wire type screens. In one embodiment, such screens may include plates having perforations, slots, and/or other filter-type openings. In one embodiment, the wires and plate openings may be oriented symmetrically, asymmetrically, horizontally, vertically, tangentially, and combinations thereof. In one embodiment, the spacing and sizes of wires and plate openings vary along the lengths of such screens. In one embodiment, such screens may include one or any combination of filter wires, plates, features with perforations, features that otherwise provide a plurality of filter-type openings, and flow control vanes. Such screens may include embodiments like those disclosed in U.S. Patent No. 6,663,774, filed on October 16, 2001, specifically with respect to the filter wires **28** and the support rods **20** described therein, and embodiments like those disclosed in U.S. Patent No. 7,425,264, filed on July 18, 2005, specifically with respect to the wires **16** and the support rods **17** described therein.

When the slurry is injected onto the screen **30,** the components of the slurry that cannot flow through the screen **30** may be directed to the first outlet **40,** and the components of the slurry that flow through the screen **30** may be directed to the second outlet **45.** The first and second outlets **40, 45** are configured to collect and direct the separate slurry components to the two outlet flow lines **8, 9,** respectively. The outlet flow lines **8, 9** may be coupled to the first and second outlets **40, 45** by sealed, flanged connections **43, 47,** respectively, to direct the separate slurry components for further processing. The first and second outlets **40, 45** may be coupled to and extend below the base **21** of the housing **20.**

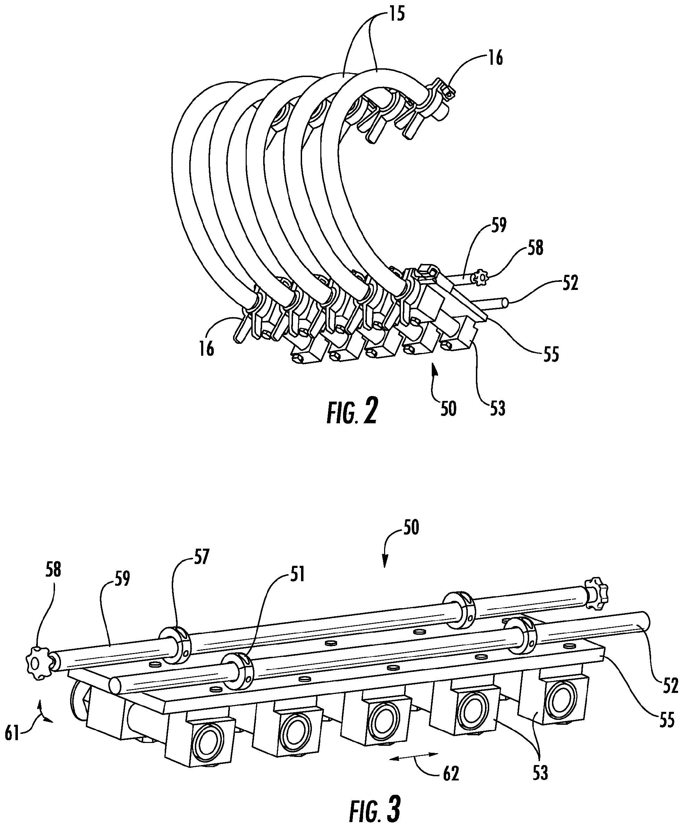

FIG. 2 illustrates the nozzle assembly **50.** One or more clamps **16** may be used to connect a first end of each of the flow lines **15** to the inlet manifold **10,** and may be used to connect a second end of each of the flow lines **15** to one or more nozzles **53.** Although five flow lines **15** and nozzles **53** are illustrated, the nozzle assembly **50** may include any number flow lines **15** and nozzles **53,** including one through four, or any plurality, of flow lines **15** and nozzles **53.** The clamps **16,** flow lines **15,** and nozzles **53** may include any conventional type of connection, flow, or injection component as known in the art. In addition, the orientation and/or arrangement of the clamps **16,** flow lines **15,** and nozzles **53** may include any conventional orientation and/or arrangement of a nozzle assembly for use with sieve boxes as known in the art.

FIG. 3 illustrates a support assembly that provides an adjustment mechanism of the nozzle assembly **50** according to one embodiment. A plate member or plate **55** (or other similar support structure) may be coupled to the nozzles **53.** One example of an alternative to the plate **55** is a frame with cross-members. A first rod **52** or first elongated support member (or another similar elongated member, such as a rectangular bar or rail structure) and a second rod **59** or second elongated support member (or another similar elongated member, such as a rectangular bar or rail structure) may be coupled to the plate member **52** by one or more support collars **51, 57** (or other similar support rings) respectively. The first rod **52** and the second rod **59** each have a respective longitudinal axis, and may be parallel or substantially parallel. In some embodiments a plate or elongated members may be provide while omitting collars.

The collars **51, 57** each define an opening and may have a substantially round circumference as shown or other shape at their periphery, for example, square. The collars **51, 57** may be fixed to the plate member **52,** by means such as a welded connection or other mounting methods, but the collars **51, 57** may be laterally and/or rotatably movable relative to the first and second rods **52, 59.** Adjustable, rotatable engagement members or knobs **58** may be threadedly coupled to opposite sides of the second rod **59** for adjusting the nozzle assembly **50** as further described below. The result in some embodiments is that the second rod **59** may pivot **61** about the first rod **52,** the collars **51, 57** (with the plate **55** and nozzle **53**) translate **62** along the rods **52, 59,** or both, to adjust the nozzle **53** discharge or spray angle and/or lateral position. In some embodiments, one or more of nozzle pitch, yaw, and axial (roll) rotational movement of a plurality of nozzles relative to the support collars and elongated support members may be made.

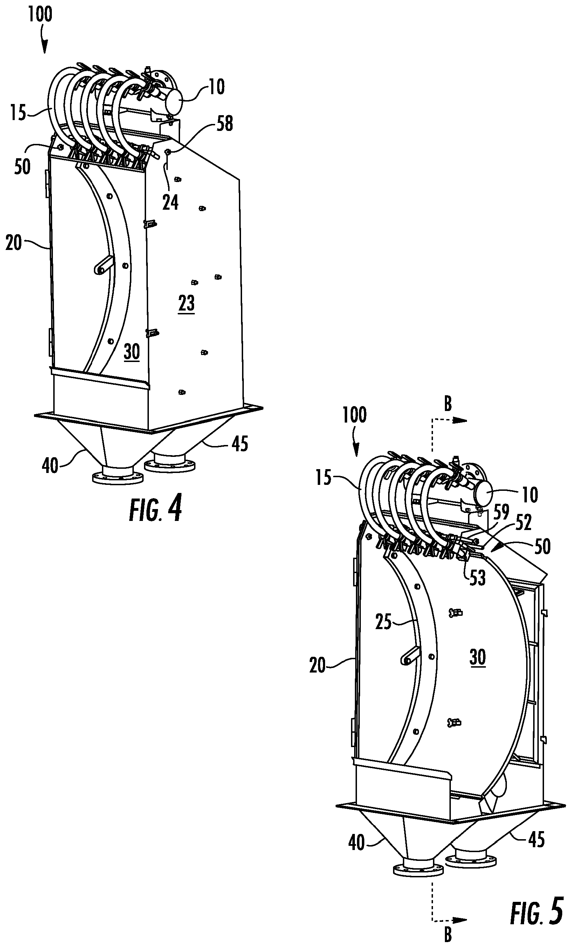

FIGS. 4 and 5 illustrate the sieve box assembly **100** with the support block **17** and the sidewall **23** removed for clarity of the nozzle assembly **50.** As illustrated, the first rod **52** may be secured within the housing **20,** and in particular may be coupled at opposite ends to the sidewalls of the housing **20,** such as the sidewall **23.** The second rod **59** may be similarly secured within the housing **20.** One method to couple the first rod **52** to the sidewall **23** is to provide a flanged socket at each end of the first rod **52** that is attached to the sidewall **23** with a first rod end received in the socket. However, the ends of the second rod **59** and/or the adjustable knobs **58** may extend through slots **24** (or other similar openings) formed in the sidewalls **23** of the housing **20** such that the adjustable knobs **58** are accessible from the exterior of the housing **20.**

Referring to FIGS. 4 and 5, one of the adjustable knobs **58** is disposed external to the sidewall **23** such that the adjustable knobs **58** and the second rod **59** can be moved within a slot **24** (or other similar opening) formed in the sidewall **23.** A corresponding slot and adjustable knob may be provided on the sidewall opposite to sidewall **23.** Although the slot **24** is represented in FIGS. 1 and 4 as straight and vertical, depending on the design desired, the slot **24** may be other than straight, such as curved, and other than vertical. To adjust the angle that the nozzle assembly **50** sprays the slurry onto the screen **30,** the second rod **59** may be moved within the slot **24,** which will move the plate member **55** and thus the nozzles **53** connected thereto. The collars **51, 57** that are secured to the plate member **55** may rotate about the first and second rods **52, 59** to permit the adjustment of the nozzle assembly **50** relative to the rods and/or the housing **20.**

Since the adjustable knobs **58** are threaded into the second rod **59,** the adjustable knobs **58** may be tightened to secure the second rod **59** in a desired position within the slot **24** and relative to the housing **20** by rotating the knobs **58** to advance the knobs **58** toward and into engagement with the sidewalls of the housing **20.** The knobs **58** may be rotated in an opposite direction to loosen the engagement with the sidewalls of the housing **20,** and may be used to reposition and re-secure the second rod **59** in another position within the slot **24.** Other manual and/or automated drive type mechanisms may be used to adjust the angular position of the nozzle assembly **50.** In this manner, the nozzle assembly **50** may be adjusted to position the slurry spray angle at an angle relative to the screen **30** to maximize operating efficiency, e.g. the efficiency of the screen **30** filtering and/or separating the components of the slurry. In one embodiment, the nozzle assembly **50** may be operable to adjust the slurry spray at an angle substantially tangent to the surface of the screen **30.** In one embodiment, the nozzle assembly **50** may be adjusted to spray the slurry onto the screen **30** to maximize fluid shear of the slurry as is flows over the screen **30.**

Alternatively or in addition to the angular adjustment, the nozzle assembly **50** may be adjusted and moved laterally, which often means horizontally, relative to the screen **30.** The nozzle assembly **50** may be repositioned along the width of the screen **30** so that the slurry spray does not wear the screen **30** in any specific horizontal location. In particular, the nozzles **53** may be moved collectively along the length of the first and second rods **52, 59** via the collars **51, 57** and the plate member **55.** In one embodiment, the nozzle assembly **50** may be manually repositioned by an operator. In one embodiment, a screw-drive type mechanism (such as with an acme-type thread) may be used to adjust the lateral position of the nozzle assembly **50.** Other manual and/or automated drive type mechanisms may be used to adjust the position of the nozzle assembly **50.** In one example, the first rod **52** may include external threads that engage internal threads of the collars **51,** such that rotation of the first rod **52** may drive the collars **51** and thus the plate member **55** and the nozzles **53** laterally relative to the screen **30.** The ends of the first rod **52** may extend outside of the housing **20** so that the nozzle assembly **50** can be adjusted laterally from the exterior of the housing **20.** In this manner, the nozzle assembly **50** may be operable to adjust the location that the slurry is sprayed onto the screen **30** to prevent wear of the screen **30** in one specific location and to increase the screen **30** operating life, without having to remove and reorient the screen **30.**

In one embodiment, angular adjustment and/or lateral position of the nozzle assembly **50** may be actuated using an actuator disposed external to the housing **20.** In one embodiment, angular adjustment and/or lateral position of the nozzle assembly **50** may be operable using an automated process.

FIG. 6 illustrates a section view along line B-B as shown in FIG. 5. As illustrated, a slurry **60** flows into the inlet manifold **10** and then through at least one of the flow lines **15** of the nozzle assembly **50.** The slurry **60** is injected onto the screen **30** to separate a first component **65** and a second component **67** of the slurry **60.** The first component **65** may include one or more solid materials having a particle size incapable of passing through the screen **30.** The first component **65** is directed over or flows along the surface of the screen **30** such that the injection velocity and/or gravity forces the first component **65** to the first outlet **40.** The second component **67** may include one or more fluids or solid materials having a particle size capable of passing through the screen **30.** The second component **65** is directed over or flows through the screen **30** such that the injection velocity and/or gravity forces the second component **67** to the second outlet **45.** The sieve box assembly **100** can be used with any type or composition of slurry for separating the slurry into one or more components. In one embodiment, the housing **20** may be partially or fully sealed, and may be partially or fully pressurized with a gas, such as carbon dioxide, to assist with the flow of the slurry through the housing **20** to the first and second outlets **40, 45.**

In some embodiments, one or more sieve box assemblies **100** may be coupled to or positioned adjacent to one or more other sieve box assemblies **100** to form a bank or group of sieve box assemblies. In some embodiments, the sieve box assembly **100** may include one or more screens **30** positioned within a single, unitary housing **20** or within a plurality of housings **20** coupled together and/or separated by one or more sidewalls **23.** In some embodiments, the sieve box assembly **100** may include one or more nozzle assemblies **50** and/or one or more inlet manifolds **10** for distributing slurry flow to the one or more nozzle assemblies **50.** For example, a sieve box **100** may have more than one screen **30** in it, and each screen **30** could have one or more nozzle assemblies **50** associated with it. In some embodiments, the sieve box assembly **100** may include one or more first and/or second outlets **40, 45.** Embodiments of the sieve box assembly **100** and nozzle assembly **50** include one or more combinations, in whole or part, of the embodiments described herein.

## Claims

1. A nozzle assembly (50) for a sieve box (100), comprising:
a support assembly configured to be mounted in a sieve box (100); and
a nozzle (53) operatively connected to the support assembly;
wherein the support assembly is configured to allow at least one of lateral movement and rotational movement of the nozzle (53) relative to the sieve box (100);
wherein the support assembly comprises:
a first elongated support member (52);
a second elongated support member (59) that is substantially parallel to and in fixed spatial relation with the first elongated support member (52),
a first support collar (51) defining an opening through which the first elongated support member (52) is received;
a second support collar (57) defining an opening through which the second elongated support member (59) is received;
a plate member (55) to which the first support collar (51), the second support collar (57), and the nozzle (53) are mounted;
wherein the nozzle (53) is operatively connected to the first support collar (51) and the second support collar (57),
wherein the support collars (51, 57) and elongated support members (52, 59) are configured to provide both of lateral movement and rotational movement of the nozzle (53) relative to the support collars (51, 57) and elongated support members (52, 59);
wherein the second elongated support member (59) is pivotable about the first elongated support member (52) so as to adjust the angles at which the plate member (55) and the nozzle (53) are disposed.

2. The nozzle assembly (50) of Claim 1, wherein at least one of the first elongated support member (52) and the second elongated support member (59) is configured to move when coupled to the sieve box (100) to adjust a spray angle of the nozzle (53).

3. The nozzle assembly (50) of Claim 1, wherein the first elongated support member (52) and the second elongated support member (59) are externally threaded, and the first support collar (51) and the second support collar (57) are internally threaded, such that when the elongated support members (52, 59) are rotated, the support collars (51, 57) translate laterally (62) along the respective elongated support member (52, 59).

4. The nozzle assembly (50) of Claim 1, wherein the first elongated support member (52) is configured to be mounted at each end to a housing (20) of the sieve box (100) and free to rotate about a longitudinal axis of the first elongated support member (52), and the second elongated support member (59) is configured to be mounted at each end within an opening in the housing (20) configured to allow movement perpendicular to a longitudinal axis of the second elongated support member (59).

5. The nozzle assembly (50) of Claim 1, further comprising at least one rotatable engagement member (58) configured to engage the housing (20) and selectively secure the second elongated support member (59) in a fixed position relative to the housing (20).

6. The nozzle assembly (50) of Claim 1, further comprising:
a third support collar defining an opening through which the first elongated support member (52) is received, the third support collar spaced from the first support collar (51);
a fourth support collar defining an opening through which the second elongated support member (59) is received, the fourth support collar spaced from the second support collar (57); and
a plurality of nozzles (53); and
a support structure to which the support collars and the plurality of nozzles (53) are mounted, wherein the support collars and elongated support members (52, 59) are configured to provide at least one of lateral movement and rotational movement of the plurality of nozzles (53) relative to the support collars and elongated support members (52, 59).

7. The nozzle assembly (50) of Claim 1, wherein the support assembly comprises one or more plates, one or more rectangular bars, or a combination thereof.

8. The sieve box (100) comprising:
a housing (20);
a nozzle assembly (50) of any one of Claims 1-7;
one or more screens disposed within the housing (20), wherein the nozzle (53) is operable to inject a slurry onto the respective screen for separating the slurry into one or more components.

9. A method of adjusting a nozzle assembly (50) in a sieve box (100),
the sieve box (100) comprising:
a housing (20);
one or more nozzle assemblies (50) each comprising:
a first elongated support member (52) coupled to the housing (20);
a second elongated support member (59) that is substantially parallel to and in fixed spatial relation with the first elongated support member (52), the second elongated support member (59) coupled to the housing (20);
a first support collar (51) and a second support collar (57) each defining an opening through which the first elongated support member (52) is received; a third support collar and a fourth support collar defining an opening through which the second elongated support member (59) is received; and
a plurality of nozzles (53) operatively connected to the support collars (51, 57); one or more screens disposed within the housing (20), wherein the plurality of nozzles (53) is operable to inject a slurry onto the respective screen for separating the slurry into one or more components;
a plate member (55) to which the first support collar (51), the second support collar (57), and the nozzle (53) are mounted;
wherein the second elongated support member (59) is pivotable about the first elongated support member (52) so as to adjust the angles at which the plate member (55) and the nozzle (53) are disposed;
the method comprising, for one or more nozzle assemblies (50):
disengaging the second elongated support member (59) from a first, fixed position relative to the housing (20) and the first elongated support member (52) to make the second elongated support member (59) movable within openings formed in the housing (20) at each end of the second elongated support member (59);
moving the second elongated support member (59) within the openings to adjust the spray angle of the plurality of nozzles (53); and
engaging the housing (20) with the second elongated support member (59) at each end of the second elongated support member (59) to secure the second elongated support member (59) in a second, fixed position relative to the housing (20) and the first elongated support member (52).

10. The method of Claim 9, wherein the first elongated support member (52) and the second elongated support member (59) are externally threaded, and the first support collar (51) and the second support collar (57) are internally threaded, and further comprising, for one or more nozzle assemblies (50):
rotating the first elongated support member (52) about its longitudinal axis, causing the first and second support collars (51, 57) to translate (62) along the first elongated member; and
rotating the second elongated support member (59) about its longitudinal axis, causing the third and fourth support collars to translate along the second elongated support member (59).

11. The method of Claim 9, further comprising:
sliding the first elongated support member (52) and the second elongated support member (59) along respective longitudinal axes to move the plurality of nozzles (53) laterally.

## Patentansprüche

1. Düsenanordnung (50) für einen Siebkasten (100), die umfasst:
eine Trageanordnung, die so ausgeführt ist, dass sie in einem Siebkasten (100) montiert wird; und
eine Düse (53), die funktional mit der Trageanordnung verbunden ist;
wobei die Trageanordnung so ausgeführt ist, dass sie eine seitliche Bewegung oder/und eine Drehbewegung der Düse (53) relativ zu dem Siebkasten (100) zulässt;
wobei die Trageanordnung umfasst:
ein erstes längliches Trageelement (52);
ein zweites längliches Trageelement (59), das im Wesentlichen parallel zu dem ersten länglichen Trageelement (52) ist und in fester räumlicher Beziehung zu ihm steht,
einen ersten Tragering (51), der eine Öffnung aufweist, über die das erste längliche Trageelement (52) aufgenommen wird;
einen zweiten Tragering (57), der eine Öffnung aufweist, über die das zweite längliche Trageelement (59) aufgenommen wird;
ein Plattenelement (55), an dem der erste Tragering (51), der zweite Tragering (57) und die Düse (53) angebracht sind;
wobei die Düse (53) funktional mit dem ersten Tragering (51) und dem zweiten Tragering (57) verbunden ist,
die Trageringe (51, 57) und die länglichen Trageelemente (52, 59) so ausgeführt sind, dass sie sowohl seitliche Bewegung als auch Drehbewegung der Düse (53) relativ zu den Trageringen (51, 57) und den länglichen Trageelementen (52, 59) ermöglichen;
und das zweite längliche Trageelement (59) um das erste längliche Trageelement (52) herum geschwenkt werden kann, um die Winkel einzustellen, in denen das Plattenelement (55) und die Düse (53) angeordnet sind.

2. Düsenanordnung (50) nach Anspruch 1, wobei das erste längliche Trageelement (52) oder/und das zweite längliche Trageelement (59) so ausgeführt ist/sind, dass es/sie sich, wenn es/sie mit dem Siebkasten (100) gekoppelt ist/sind, bewegt/bewegen, um einen Sprühwinkel der Düse (53) einzustellen.

3. Düsenanordnung (50) nach Anspruch 1, wobei das erste längliche Trageelement (52) und das zweite längliche Trageelement (59) mit Außengewinde versehen sind und der erste Tragering (51) und der zweite Tragering (57) mit Innengewinde versehen sind, so dass, wenn die länglichen Trageelemente (52, 59) gedreht werden, sich die Trageringe (51, 57) seitlich (62) an dem jeweiligen länglichen Trageelement entlang (52, 59) verschieben.

4. Düsenanordnung (50) nach Anspruch 1, wobei das erste längliche Trageelement (52) so ausgeführt ist, dass es an jedem Ende an einem Gehäuse (20) des Siebkastens (100) angebracht ist und sich frei um eine Längsachse des ersten länglichen Trageelementes (52) dreht, und das zweite längliche Trageelement (59) so ausgeführt ist, dass es an jedem Ende im Inneren einer Öffnung in dem Gehäuse (20) angebracht ist, die so ausgeführt ist, dass sie Bewegung senkrecht zu einer Längsachse des zweiten länglichen Trageelementes (59) zulässt.

5. Düsenanordnung (50) nach Anspruch 1, die des Weiteren wenigstens ein drehbares Eingriffselement (58) umfasst, das so ausgeführt ist, dass es mit dem Gehäuse (20) in Eingriff ist und das zweite längliche Trageelement (59) selektiv in einer festen Position relativ zu dem Gehäuse (20) sichert.

6. Düsenanordnung (50) nach Anspruch 1, des Weiteren umfassend:
einen dritten Tragering, der eine Öffnung aufweist, über die das erste längliche Trageelement (52) aufgenommen wird, wobei der dritte Tragering von dem ersten Tragering (51) beabstandet ist;
einen vierten Tragering, der eine Öffnung aufweist, über die das zweite längliche Trageelement (59) aufgenommen wird, wobei der vierte Tragering von dem ersten Tragering (57) beabstandet ist; und
eine Vielzahl von Düsen (53); sowie
eine Tragestruktur, an der die Trageringe und die Vielzahl von Düsen (53) angebracht sind, wobei die Trageringe und die länglichen Trageelemente (52, 59) so ausgeführt sind, dass sie eine seitliche Bewegung oder/und eine Drehbewegung der Vielzahl von Düsen (53) relativ zu den Trageringen und den länglichen Trageelementen (52, 59) ermöglichen.

7. Düsenanordnung (50) nach Anspruch 1, wobei die Trageanordnung eine oder mehrere Platte/n, einen rechteckigen Stab oder mehrere rechteckige Stäbe oder eine Kombination derselben umfasst.

8. Siebkasten (100), der umfasst:
ein Gehäuse (20);
eine Düsenanordnung (50) nach einem der Ansprüche 1-7;
ein oder mehrere Sieb/e, das/die im Inneren des Gehäuses (20) angeordnet ist/sind, wobei die Düse (53) in Funktion eine Aufschlämmung auf das jeweilige Sieb aufspritzen kann, um die Aufschlämmung in eine oder mehrere Komponente/n zu trennen.

9. Verfahren zum Einstellen einer Düsenanordnung (50) in einem Siebkasten (100),
wobei der Siebkasten (100) umfasst:
ein Gehäuse (20);
eine oder mehrere Düsenanordnung/en (50), die jeweils umfasst/umfassen:
ein erstes längliches Trageelement (52), das mit dem Gehäuse (20) gekoppelt ist;
ein zweites längliches Trageelement (59), das im Wesentlichen parallel zu dem ersten länglichen Trageelement (52) ist und in fester räumlicher Beziehung zu ihm steht, wobei das zweite längliche Trageelement (59) mit dem Gehäuse (20) gekoppelt ist;
einen ersten Tragering (51) und einen zweiten Tragering (57), die jeweils eine Öffnung aufweisen, über die das erste längliche Trageelement (52) aufgenommen wird; einen dritten Tragering und einen vierten Tragering, die eine Öffnung aufweisen, über die das zweite längliche Trageelement (59) aufgenommen wird; sowie
eine Vielzahl von Düsen (53), die funktional mit den Trageringen (51, 57) verbunden sind; ein oder mehrere Sieb/e, das/die im Inneren des Gehäuses (20) angeordnet ist/sind, wobei die Vielzahl von Düsen (53) in Funktion eine Aufschlämmung auf das jeweilige Sieb aufspritzen kann, um die Aufschlämmung in eine oder mehrere Komponente/n zu trennen;
ein Plattenelement (55), an dem der erste Tragering (51), der zweite Tragering (57) und die Düse (53) angebracht sind;
wobei das zweite längliche Trageelement (59) um das erste längliche Trageelement (52) herum geschwenkt werden kann, um die Winkel einzustellen, in denen das Plattenelement (55) und die Düse (53) angeordnet sind;
wobei das Verfahren für eine oder mehrere Düsenanordnung/en (50) umfasst:
Lösen des zweiten länglichen Trageelementes (59) aus einer ersten festen Position relativ zu dem Gehäuse (20) und dem ersten länglichen Trageelement (52), damit das zweite längliche Trageelement (59) im Inneren von Öffnungen bewegt werden kann, die in dem Gehäuse (20) an jedem Ende des zweiten länglichen Trageelementes (59) ausgebildet sind;
Bewegen des zweiten länglichen Trageelementes (59) im Inneren der Öffnungen, um den Sprühwinkel der Vielzahl von Düsen (53) einzustellen; und
Herstellen von Eingriff des Gehäuses (20) mit dem zweiten länglichen Trageelement (59) an jedem Ende des zweiten länglichen Trageelementes (59), um das zweite längliche Trageelement (59) in einer zweiten festen Position relativ zu dem Gehäuse (20) und dem ersten länglichen Trageelement (52) zu sichern.

10. Verfahren nach Anspruch 9, wobei das erste längliche Trageelement (52) und das zweite längliche Trageelement (59) mit Außengewinde versehen sind und der erste Tragering (51) und der zweite Tragering (57) mit Innengewinde versehen sind, und das des Weiteren für eine oder mehrere Düsenanordnung/en (50) umfasst:
Drehen des ersten länglichen Trageelementes (52) um seine Längsachse, wodurch der erste und der zweite Tragering (51, 57) an dem ersten länglichen Element entlang verschoben (62) werden; und
Drehen des zweiten länglichen Trageelementes (59) um seine Längsachse, wodurch der dritte und der vierte Tragering an dem zweiten länglichen Trageelement (59) entlang verschoben werden.

11. Verfahren nach Anspruch 9, das des Weiteren umfasst:
Verschieben des ersten länglichen Trageelementes (52) und des zweiten länglichen Trageelementes (59) entlang jeweiliger Längsachsen, um die Vielzahl von Düsen (53) seitlich zu bewegen.

## Revendications

1. Ensemble de buse (50) pour une boîte à tamis (100), comprenant :
un ensemble de support configuré pour être monté dans une boîte à tamis (100) ; et
une buse (53) connectée fonctionnellement à l'ensemble de support ;
dans lequel l'ensemble de support est configuré pour permettre au moins l'un parmi un mouvement latéral et un mouvement rotationnel de la buse (53) par rapport à la boîte à tamis (100) ;
dans lequel l'ensemble de support comprend :
un premier élément de support allongé (52) ;
un second élément de support allongé (59) qui est sensiblement parallèle au premier élément de support allongé (52), et en relation spatiale avec celui-ci,
un premier collier de support (51) définissant une ouverture à travers laquelle le premier élément de support allongé (52) est reçu ;
un deuxième collier de support (57) définissant une ouverture à travers laquelle le second élément de support allongé (59) est reçu ;
un élément de plaque (55) sur lequel le premier collier de support (51), le deuxième collier de support (57), et la buse (53) sont montés ;
dans lequel la buse (53) est reliée fonctionnellement au premier collier de support (51) et au deuxième collier de support (57),
dans lequel les colliers de support (51, 57) et les éléments de support allongés (52, 59) sont configurés pour fournir à la fois un mouvement latéral et un mouvement rotationnel de la buse (53) par rapport aux colliers de support (51, 57) et aux éléments de support allongés (52, 59) ;
dans lequel le second élément de support allongé (59) peut pivoter autour du premier élément de support allongé (52) de manière à ajuster les angles auxquels l'élément de plaque (55) et la buse (53) sont disposés.

2. Ensemble de buse (50) selon la revendication 1, dans lequel au moins l'un du premier élément de support allongé (52) et du second élément de support allongé (59) est configuré pour se déplacer lorsqu'il est couplé à la boîte à tamis (100) pour ajuster un angle de pulvérisation de la buse (53).

3. Ensemble de buse (50) selon la revendication 1, dans lequel le premier élément de support allongé (52) et le second élément de support allongé (59) sont filetés de manière externe, et le premier collier de support (51) et le deuxième collier de support (57) sont filetés de manière interne, de sorte que lorsque les éléments de support allongés (52, 59) sont tournés, les colliers de support (51, 57) se déplacent latéralement (62) le long de l'élément de support allongé respectif (52, 59).

4. Ensemble de buse (50) selon la revendication 1, dans lequel le premier élément de support allongé (52) est configuré pour être monté à chaque extrémité sur un logement (20) de la boîte à tamis (100) et est libre de tourner autour d'un axe longitudinal du premier élément de support allongé (52), et le second élément de support allongé (59) est configuré pour être monté à chaque extrémité à l'intérieur d'une ouverture dans le logement (20) configurée pour permettre un mouvement perpendiculaire à un axe longitudinal du second élément de support allongé (59).

5. Ensemble de buse (50) selon la revendication 1, comprenant en outre au moins un élément de mise en prise rotatif (58) configuré pour mettre en prise le logement (20) et fixer sélectivement le second élément de support allongé (59) dans une position fixe par rapport au logement (20).

6. Ensemble de buse (50) selon la revendication 1, comprenant en outre :
un troisième collier de support définissant une ouverture à travers laquelle le premier élément de support allongé (52) est reçu, le troisième collier de support étant espacé du premier collier de support (51) ;
un quatrième collier de support définissant une ouverture à travers laquelle le second élément de support allongé (59) est reçu, le quatrième collier de support étant espacé du deuxième collier de support (57) ; et
une pluralité de buses (53) ; et
une structure de support sur laquelle les colliers de support et la pluralité de buses (53) sont montés, dans lequel les colliers de support et les éléments de support allongés (52, 59) sont configurés pour fournir au moins un mouvement latéral et un mouvement rotationnel de la pluralité de buses (53) par rapport aux colliers de support et aux éléments de support allongés (52, 59).

7. Ensemble de buse (50) selon la revendication 1, dans lequel l'ensemble de support comprend une ou plusieurs plaques, une ou plusieurs barres rectangulaires, ou une combinaison de celles-ci.

8. Boîte à tamis (100) comprenant :
un logement (20) ;
un ensemble de buses (50) selon l'une quelconque des revendications 1 à 7 ;
un ou plusieurs écrans disposés à l'intérieur du logement (20), dans laquelle la buse (53) est opérationnelle pour injecter une suspension sur l'écran respectif pour séparer la suspension en un ou plusieurs composants.

9. Procédé d'ajustement d'un ensemble de buse (50) dans une boîte à tamis (100),
la boîte à tamis (100) comprenant :
un logement (20) ;
un ou plusieurs ensembles de buse (50) comprenant chacun :
un premier élément de support allongé (52) couplé au logement (20) ;
un second élément de support allongé (59) qui est sensiblement parallèle au premier élément de support allongé (52), et en relation spatiale fixe avec celui-ci, le second élément de support allongé (59) étant couplé au logement (20) ;
un premier collier de support (51) et un deuxième collier de support (57) définissant chacun une ouverture à travers laquelle le premier élément de support allongé (52) est reçu ; un troisième collier de support et un quatrième collier de support définissant une ouverture à travers laquelle le second élément de support allongé (59) est reçu ; et une pluralité de buses (53) connectées fonctionnellement aux colliers de support (51, 57) ; un ou plusieurs écrans disposés à l'intérieur du logement (20), dans lequel la pluralité de buses (53) est opérationnelle pour injecter une suspension sur l'écran respectif pour séparer la suspension en un ou plusieurs composants ;
un élément de plaque (55) sur lequel le premier collier de support (51), le deuxième collier de support (57), et la buse (53) sont montés ;
dans lequel le second élément de support allongé (59) peut pivoter autour du premier élément de support allongé (52) de manière à ajuster les angles auxquels l'élément de plaque (55) et la buse (53) sont disposés ;
le procédé comprenant, pour un ou plusieurs ensembles de buse (50), les étapes consistant à :
dégager le second élément de support allongé (59) depuis une première position fixe par rapport au logement (20) et au premier élément de support allongé (52) pour rendre le second élément de support allongé (59) mobile dans des ouvertures formées dans le logement (20) à chaque extrémité du second élément de support allongé (59) ;
déplacer le second élément de support allongé (59) à l'intérieur des ouvertures pour ajuster l'angle de pulvérisation de la pluralité de buses (53) ; et
mettre en prise le logement (20) avec le second élément de support allongé (59) à chaque extrémité du second élément de support allongé (59) pour fixer le second élément de support allongé (59) dans une seconde position fixe par rapport au logement (20) et au premier élément de support allongé (52).

10. Procédé selon la revendication 9, dans lequel le premier élément de support allongé (52) et le second élément de support allongé (59) sont filetés de manière externe, et le premier collier de support (51) et le deuxième collier de support (57) sont filetés de manière interne, et comprenant en outre, pour un ou plusieurs ensembles de buse (50), les étapes consistant à :
faire tourner le premier élément de support allongé (52) autour de son axe longitudinal, amenant les premier et deuxième colliers de support (51, 57) à se déplacer (62) le long du premier élément allongé ; et
faire tourner le second élément de support allongé (59) autour de son axe longitudinal, amenant les troisième et quatrième colliers de support à se déplacer le long du second élément de support allongé (59).

11. Procédé selon la revendication 9, comprenant en outre :
le coulissement du premier élément de support allongé (52) et du second élément de support allongé (59) le long d'axes longitudinaux respectifs pour déplacer la pluralité de buses (53) latéralement.
